# EUROPÄISCHE PATENTSCHRIFT

(11) **EP 2 794 119 B1**
(45) Veröffentlichungstag und Bekanntmachung des Hinweises auf die Patenterteilung: **24.01.2018**
(21) Anmeldenummer: 12753103.6
(22) Anmeldetag: 20.08.2012
(51) Int. Cl.: B05C 17/005, B05C 17/01, B05C 21/00

(54) **KARTUSCHE, VERFAHREN ZUR HERSTELLUNG EINER SOLCHEN, SOWIE MEHRKOMPONENTENKARTUSCHE**
CARTRIDGE, METHOD FOR PRODUCING SAME AND MULTI-COMPONENT CARTRIDGE
CARTOUCHE, PROCÉDÉ DE FABRICATION DE CELLE-CI, AINSI QUE CARTOUCHE À PLUSIEURS COMPOSANTS

(30) Priorität: 17.10.2011 EP 11185380
(43) Veröffentlichungstag der Anmeldung: 29.10.2014
(73) Patentinhaber: Sulzer Mixpac AG, 9469 Haag (CH)
(72) Erfinder: ETTLIN, Josef, CH-9453 Eichberg (CH)
(74) Vertreter: Manitz Finsterwald Patentanwälte PartmbB
(86) Internationale Anmeldenummer: PCT/EP2012/066190
(87) Internationale Veröffentlichungsnummer: WO 2013/056872

(56) Entgegenhaltungen:
- EP-A1- 1 829 796
- EP-A2- 0 721 805
- JP-A- 7 256 178

## Beschreibung

Die Erfindung betrifft eine Kartusche mit mindestens einer sich in Längsrichtung erstreckenden Aufnahmekammer für ein auszutragendes Medium, ein Verfahren zu ihrer Herstellung sowie eine Mehrkomponentenkartusche gemäss dem Oberbegriff des jeweiligen unabhängigen Patentanspruchs.

Im industriellen Bereich, im Bauwesen, beispielsweise von Gebäuden, und auch im Dentalbereich werden häufig Kartuschen eingesetzt, um flüssige oder fliessfähige, oftmals pastöse oder viskose bis hochviskose Substanzen zu lagern und bei Bedarf für die jeweilige Anwendung auszutragen. Beispiele für solche Substanzen sind Fugendichtmassen, Massen für chemische Dübel oder chemische Anker, Klebstoffe, Pasten oder Abformmassen im Dentalbereich. Üblicherweise sind diese Kartuschen aus Kunststoff gefertigt und werden in einem Spritzgiessverfahren hergestellt.

Man unterscheidet zwischen Einkomponentensystem, bei welchen das auszutragende Material nur aus einer Komponente besteht, und Zwei- oder Mehrkomponentensystemen, bei denen mindestens zwei verschiedene Komponenten in separaten Kammern der gleichen Kartusche oder in separaten Kartuschen gelagert werden, wobei die Komponenten beispielsweise beim Austragen mittels einer dynamischen oder einer statischen Mischvorrichtung innig durchmischt werden. Beispiele hierfür sind Zwei-Komponenten-Kleber oder chemische Dübel, die erst nach dem Durchmischen der beiden Komponenten aushärten. Insbesondere im industriellen Bereich werden Zweikomponentensysteme auch für Farben eingesetzt, die oft zur Erzeugung funktioneller Schutzschichten, z.B. zum Korrosionsschutz, verwendet werden.

Meistens ist es so, dass die Kartuschen einen oder mehrere axial verschiebbaren Förderkolben umfassen, durch dessen Bewegung das Material aus der Kammer oder den Kammern ausgetragen wird. Es versteht sich, dass dazu die Kammern genügend dicke Wandungen aufweisen müssen, um dem beim Austragen entstehenden Druck standhalten zu können. Zudem müssen die Kartuschen genügend dicke Wandstärken aufweisen, um ausreichend diffusionsdicht zu sein. Dies ist insbesondere im Hinblick auf die Lagerung wichtig, um ein Hineindiffundieren oder ein Herausdiffundieren der chemischen Substanzen und damit eine Degradation des Kartuscheninhalts möglichst wirkungsvoll zu verhindern. Da solche Kunststoffkartuschen in der Regel nur für den Einmalgebrauch ausgelegt sind, resultiert sowohl vom Volumen als auch von der Masse eine erhebliche Abfallmenge, was insbesondere auch unter Aspekten des Umweltschutzes nachteilig ist.

Neben dem Aspekt des Umweltschutzes gewinnt auch das Thema der Nachhaltigkeit zunehmend an Bedeutung. Die Verwendung erneuerbarer Ausgangsmaterialien, die Minimierung des Rohmaterialverbrauchs sowie eine möglichst starke Reduzierung des Abfalls sowohl im Hinblick auf die Kartusche an sich als auch auf das in der Kartusche verbleibende Volumen an Restmasse gewinnen zunehmend an Bedeutung.

Die EP 0 721 805 A2 offenbart eine Vorrichtung zum Mischen und Ausbringen einer Formmasse deren Kartuschen aus Kartonhülsen bestehen. Die JP-A-7 256 178 beschreibt ebenfalls eine Kartusche die eine Kartonwandung aufweist. Die EP 1 829 796 zeigt eine Kartusche dessen Stirnseite und Kartuschenwand in einem Spritzgzussverfahren einstückig ausgebildet sind.

Es ist daher eine Aufgabe der Erfindung eine Kartusche vorzuschlagen, die im Hinblick auf Nachhaltigkeit und Umweltschutz eine Verbesserung darstellt, insbesondere auch bezüglich ihres Abfallvolumens und ihrer Abfallmenge.

Dabei sollen eine hohe Funktionssicherheit und eine gute Lagerfähigkeit der Kartusche gewährleistet sein. Ferner soll durch die Erfindung ein Verfahren zum Herstellen einer solchen Kartusche bereitgestellt werden. Weiterhin soll durch die Erfindung eine entsprechende Mehrkomponentenkartusche ermöglicht werden.

Die diese Aufgabe lösenden Gegenstände der Erfindung sind durch die Merkmale des unabhängigen Patentanspruchs der jeweiligen Kategorie gekennzeichnet.

Erfindungsgemäss wird also eine Kartusche vorgeschlagen mit mindestens einer sich in Längsrichtung erstreckenden Aufnahmekammer für ein auszutragendes Medium, mit einer Stirnseite und einer Kartuschenwand, welche die Aufnahmekammer begrenzen und einstückig spritzgegossen sind, wobei die Stirnseite einen Auslass für das Medium aufweist, wobei die Kartuschenwand an ihrer die Aufnahmekammer begrenzenden Innenseite eine erste Folie aufweist, die sich über die gesamte Kartuschenwand erstreckt und unlösbar mit der Kartuschenwand verbunden ist und wobei die Stirnseite auf ihrer der Aufnahmekammer zugewandten Oberfläche eine zweite Folie aufweist, die sich über die gesamte Stirnseite erstreckt und unlösbar mit der Stirnseite verbunden ist.

Durch die innen an der Kartuschenwand vorgesehene Folie, die unlösbar mit der Kartuschenwand verbunden ist, wird eine sehr effiziente Diffusionssperre realisiert, sodass die Wanddicke der Kartusche gegenüber heute bekannten Kartuschensystemen deutlich reduziert werden kann, ohne dass dafür Zugeständnisse an die Lagerfähigkeit bzw. die maximale Lagerzeit notwändig sind. Selbst bei längeren Lagerzeiten wird der Kartuscheninhalt wirkungsvoll gegen das Aus- oder Eindiffundieren von Substanzen bzw. ein "Ausgasen" geschützt. Eine deutlich reduzierte Wandstärke bedeutet aber einen wesentlich geringeren Rohstoffbedarf sowie eine spürbare Reduktion der Abfallmenge. Ein weiterer positiver Aspekt ist es, dass die Kartuschenwand durch die Folie geschützt werden kann, z.B. wenn das Material der Kartuschenwand empfindlich gegenüber dem Medium in der Aufnahmekammer ist. Ferner ist es möglich, für die Kartusche ein kostengünstigeres oder ein umweltfreundlicheres Material zu verwenden, weil die Kartuschenwand gegenüber dem Medium durch die Folie geschützt ist und nicht mehr zwangsläufig unempfindlich gegenüber dem Medium sein muss. Insbesondere können auch Bio-Polymere für die Herstellung der Kartusche eingesetzt werden. Vorzugsweise wird die Kartusche beim Austragen ihres Inhalts in eine wiederverwendbare Stützkartusche eingelegt, damit die Kartuschenwand den mechanischen Belastungen beim Austragen standhält.

Durch die Massnahme, dass die Stirnseite auf ihrer der Aufnahmekammer zugewandten Oberfläche eine zweite Folie auf, die sich über die gesamte Stirnseite erstreckt und unlösbar mit der Stirnseite verbunden ist, ist der Kartuscheninhalt auch gegen Diffusionsprozesse durch die Stirnseite geschützt.

Bei einer bevorzugten Ausführungsform ist ferner ein Kolben vorgesehen, welcher an dem der Stirnseite abgewandten Ende in die Aufnahmekammer einführbar ist und dichtend entlang der Kartuschenwand in Längsrichtung verschiebbar ist. Die Verwendung eines Kolbens in der Aufnahmekammer zum Austragen des Mediums hat den Vorteil, dass in der Regel geringere Restmassenvolumen in der Kartusche verbleiben, wodurch die Abfallmenge reduziert wird. Ferner werden bei chemischen Medien in der Aufnahmekammer die durch die Chemie bedingten Risiken minimiert.

Eine vorteilhafte Massnahme besteht darin, dass der Kolben auf seiner der Aufnahmekammer zugewandten Oberfläche eine dritte Folie aufweist. In Kombination mit der Folie auf der Stirnfläche ist dann das Medium in der Kartusche vollständig von Folie umgeben, d.h. vollständig in Folie verpackt.

Gemäss einer bevorzugten Ausführungsform weist die Kartuschewand eine Wanddicke von höchstens 2mm, vorzugsweise höchstens 1.5 mm und insbesondere höchstens 0.8 mm auf. Je dünner die Kartuschenwand ausgestaltet ist, umso geringer ist der Rohstoffbedarf für die Herstellung der Kartusche und die Abfallmenge nach dem Entleeren der Kartusche.

In der Praxis hat es sich bewährt, wenn die erste oder die zweite oder die dritte Folie eine Dicke von höchsten 0.2 mm, vorzugsweise von etwa 0.1 mm aufweist.

Bei einer bevorzugten Ausführungsform sind bei der Kartusche Verbindungsmittel vorgesehen, mittels welcher die Kartusche mit einer zweiten Kartusche verbindbar ist. Diese Verbindungsmittel können insbesondere als Verrastung oder als Klick- oder Schnappverbindung ausgestaltet sein. Die Verbindungsmittel sind vorzugsweise so angeordnet, dass die beiden Kartuschen Seite an Seite nebeneinander verbindbar sind, sodass ihre Längsrichtungen bzw. Längsachsen parallel zu einander verlaufen. Die Möglichkeit, mehrere Kartuschen über die Verbindungsmittel miteinander zu verbinden, erhöht die Flexibiltät bezüglich der Anwendungsgebiete deutlich, weil insbesondere die Kartuschen sehr leicht für Mehrkomponentensystem eingesetzt werden können.

Insbesondere ist es vorteilhaft, wenn die erste oder die zweite oder die dritte Folie als Mehrschichtsystem ausgestaltet ist. Hierdurch ist es nämlich möglich, die Folien optimal auf den jeweiligen Anwendungsfall anzupassen. Die Eigenschaften der als Barriere dienenden Folien können gezielt eingestellt werden, um sie möglichst effizient im Hinblick auf das Medium in der Aufnahmekammer zu machen. Bevorzugt ist ein solches Mehrschichtsystem als Verbundfolie ausgestaltet. Das Mehrschichtsystem kann auch metallische Schichten umfasssen.

Durch die Erfindung wird ferner ein Verfahren zum Herstellen einer erfindungsgemässen Kartusche vorgeschlagen, bei welchem in einem Werkzeug einer Spritzgiessvorrichtung ein Kern vorgesehen ist, welcher formgebend für die Aufnahmekammer der Kartusche ist, wobei auf die Mantelfläche des Kerns eine Folie aufgebracht wird, die anschliessend mit einem flüssigen Kunststoff umspritzt wird. Durch dieses Umspritzen ist es möglich, die Folie leicht anzuschmelzen bzw. zu plastifizieren, sodass sie anschliessend beim Abkühlen und Erstarren des Kunststoffs eine innige, unlösbare Verbindung mit der Kartuschenwand eingeht.

Eine bevorzugte Verfahrensführung besteht darin, dass auf die Stirnseite des Kerns eine zweite Folie aufgebracht wird, bevor der flüssige Kunststoff in das Werkzeug eingebracht wird. Mit dieser Folie lässt sich dann in der Kartusche die zweite Folie realisieren, die auf der Stirnseite der Kartusche angebeordnet ist. Bei der Herstellung der Kartusche wird diese Folie vorzugsweise so bemessen, dass sie bezüglich der Stirnseite des Kerns, auf den sie aufgelegt wird, ein Übermass aufweist, also über den Rand der Stirnseite hinaussteht. Beim Spritzgiessen wird dann durch den flüssigen Kunststoff der über den Rand hinausstehende Teil der Folie so umgebogen, dass er sich mit der auf der Mantelfläche des Kerns angeordneten Folie dichtend verbindet.

Durch die Erfindung wird ferner eine Mehrkomponentenkartusche vorgeschlagen mit mindestens zwei erfindungsgemässen Kartuschen, wobei die beiden Kartuschen bezüglich der Längsrichtung nebeneinander angeordnet sind, oder wobei die beiden Kartuschen ineinander, vorzugsweise koaxial ineinander angeordnet sind, sodass die eine Kartusche die andere Kartusche umschliesst. Bei der ersten Variante handelt es sich um sogenannte Side-by-Side-Kartuschen, bei denen die beiden Aufnahmekammern nebeneinander angeordnet sind. Bei der zweiten Variante sind die beiden Kartuschen ineinander angeordnet, sodass die Kartuschenwand der äusseren Kartusche die Kartuschenwand der inneren Kartusche vollständig umgibt. Vorzugsweise ist dabei die innere Kartusche in der äusseren Kartusche zentriert, sodass ihre Längsachsen A zusammenfallen. Man spricht dann von Koaxialkartuschen. Durch diese Mehrkomponentenkartusche lässt sich das Anwendungsgebiet der erfindungsgemässen Kartusche auf Zwei- bzw. Mehrkomponentensysteme erweitern.

Vorzugsweise sind die beiden Kartuschen dabei über die Verbindungsmittel fest miteinander gekoppelt, sodass die Mehrkomponentenkartusche eine lager- und austragsfähige Einheit bildet.

Eine besonders vorteilhafte Massnahme ist es, wenn die Auslässe der Kartuschen ein gemeinsames Verbindungsstück bilden, das zum Zusammenwirken mit einem Zubehörteil, insbesondere mit einem Verschluss oder mit einem Mischer, ausgestaltet ist. Auf diese Weise ist es beispielsweise möglich, an sich bekannte Zubehörteile in Verbindung mit der Mehrkomponentenkartusche zu verwenden. Diese Kompatibilität ist aus praktischen und wirtschaftlichen Gründen vorteilhaft.

Um den Inhalt der Austragskammern während der Lagerung zu schützen ist es vorteilhaft, wenn die Mehrkomponentenkartusche einen Verschluss aufweist, der zum Zusammenwirken mit dem Verbindungsstück ausgestaltet ist und zwei Stopfen aufweist, von denen jeder in einen Auslass eingreifen kann, um diesen zu verschliessen.

Um die Flexibilität der Mehrkomponentenkartusche bezüglich der Einsatzgebiete und Anwendungsfälle zu erhöhen, können die Aufnahmekammern der beiden Kartuschen verschiedene Volumen aufweisen, sodass insbesondere Mischungsverhältnisse zwischen den beiden in den Aufnahmekammern der Kartuschen enthaltenen Medien realisierbar sind, die von dem Verhältnis 1:1 abweichen.

Weitere vorteilhafte Massnahmen und Ausgestaltungen der Erfindung in apparativer wie in verfahrenstechnischer Sicht ergeben sich aus den abhängigen Ansprüchen.

Im Folgenden wird die Erfindung anhand von Ausführungsbeispielen und anhand der Zeichnung näher erläutert. In der schematischen Zeichnung zeigen teilweise im Schnitt:
- Fig. 1:: ein Ausführungsbeispiel einer erfindungsgemässen Kartusche in einem Längsschnitt sowie einen vergrösserten Ausschnitt aus der Kartuschenwand,
- Fig. 2:: eine schematische Darstellung zur Erläuterung eines Ausführungsbeispiels des erfindungsgemässen Verfahrens
- Fig. 3:: eine perspektivische Darstellung eines ersten Ausführungsbeispiels einer erfindungsgemässen Mehrkomponentenkartusche,
- Fig. 4:: eine Darstellung der Auslässe mit einem eingesetzten Verschluss,
- Fig. 5:: eine Darstellung der Auslässe mit einem aufgesetzten Mischer (nur teilweise dargestellt),
- Fig. 6:: eine Ansicht eines zweiten Ausführungsbeispiels einer erfindungsgemässen Mehrkomponentenkartusche
- Fig. 7:: eine Ansicht eines dritten Ausführungsbeispiels einer erfindungsgemässen Mehrkomponentenkartusche, und
- Fig. 8-9:: Darstellungen einer Austragsvorrichtung, welche für die erfindungsgemässe Kartusche bzw. die erfindungsgemässe Mehrkomponentenkartusche geeignet ist.

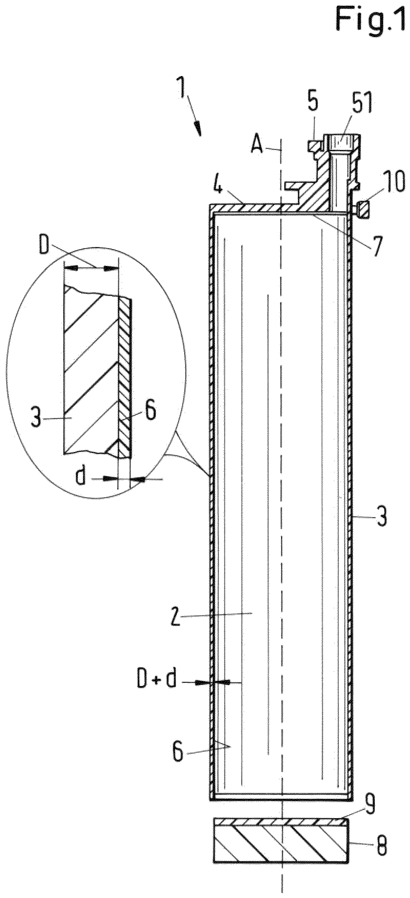

Fig. 1 zeigt in einem Längsschnitt ein Ausführungsbeispiel einer erfindungsgemässen Kartusche, die gesamthaft mit dem Bezugszeichen 1 bezeichnet ist. Die Kartusche 1 umfasst eine sich in Längsrichtung erstreckende Aufnahmekammer 2 für ein auszutragendes Medium. Die Längsrichtung ist durch die mit A bezeichnete Längsachse der Kartusche 1 festgelegt. Die Aufnahmekammer 2 ist durch eine Kartuschenwand 3 sowie eine Stirnseite 4 begrenzt. Die Aufnahmekammer 2 der Kartusche 1 ist zylinderförmig ausgestaltet, das heisst, die Kartuschenwand 3 ist die Mantelfläche eines Zylinders. Zusätzlich zeigt Fig. 1 noch einen vergrösserten Ausschnitt aus der Kartuschenwand 3.

Die Stirnseite 4 der Kartusche 1 weißt einen Auslass 5 mit einem Auslasskanal 51 für das Medium auf, durch welchen das Medium aus der Aufnahmekammer 2 ausgetragen werden kann. Die Kartuschenwand 3 und die Stirnseite 4 mit dem Auslass 5 sind einstückig spritzgegossen, das heisst sie werden gesamthaft in einem einzigen, üblicherweise einstufigen Spritzgiessprozess hergestellt. Es handelt sich also nicht um solche Kartuschen, die beispielsweise aus zwei Halbzylindern bestehen, die anschliessend miteinander verschweisst werden.

Erfindungsgemäss weist die Kartuschenwand 3 an ihrer die Aufnahmekammer 2 begrenzenden Innenwand eine erste Folie 6 auf, wie dies inbesondere die Detaildarstellung in Fig. 1 zeigt. Diese erste Folie 6 erstreckt sich über die gesamte Kartuschenwand 3, also über die gesamte Innenseite des Zylindermantels, welcher die Aufnahmekammer 2 begrenzt. Die Folie 6 ist unlösbar mit der Kartuschenwand 3 verbunden und wird vorzugsweise im Spritzgiessprozess mit der Kartuschenwand 3 verbunden, so wie das weiter hinten noch erläutert wird.

Bei dem hier beschriebenen Ausführungsbeispiel weist die Stirnfläche 4 auf ihrer der Aufnahmekammer 2 zugewandten Oberfläche eine zweite Folie 7 auf, die sich über die gesamte Stirnseite 4 erstreckt und unlösbar mit der Stirnseite 4 verbunden ist, vorzugsweise sinngemäss gleich wie die erste Folie 6. Die zweite Folie 7 ist kreisscheibenförmig und erstreckt sich auch über die Einmündung des Auslasskanals 51 in die Aufnahmekammer 2. Folglich ist der Auslasskanal 51 an seiner Einmündung in die Aufnahmekammer 2 durch die zweite Folie 7 verschlossen.

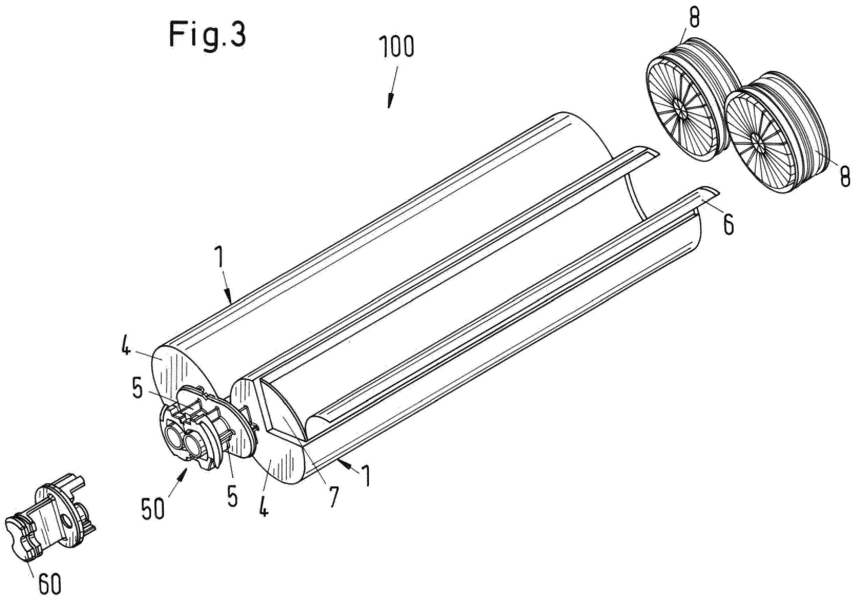

Die Kartusche 1 weist ferner Verbindungsmittel 10 auf, mittels welcher die Kartusche 1 mit einer zweiten Kartusche 1 verbindbar ist. Bei dem hier beschriebenen Ausführungsbeispiel sind die Verbindungsmittel 10 neben dem Auslass 5 an der Stirnseite 4 der Kartusche 1 vorgesehen. Die Verbindungsmittel 10 sind bevorzugt und in an sich bekannter Weise als Klick- oder als Schnapp- oder als Rastverbindung ausgestaltet und so angeordnet, dass zwei Kartuschen 1 Seite an Seite also mit parallelen Längsachsen A nebeneinander angeordnet sind (siehe z. B. Fig. 3). Alternativ oder zusätzlich können natürlich auch Verbindungsmittel entlang der Kartuschenwand 3 angeordnet sein

An dem der Stirnseite 4 abgewandten Ende ist die Kartusche 1 bzw. die Aufnahmekammer 2 offen. Es ist ein Kolben 8 vorgesehen, der vorzugsweise als Ventilkolben oder als selbstentlüftender Kolben ausgestaltet ist, und welcher an dem der Stirnseite 4 abgewandten offenen Ende der Kartusche 1 in die Aufnahmekammer 2 einführbar ist. Der Kolben 8 ist so ausgestaltet und bemessen, dass er dichtend in der Längsrichtung entlang der Kartuschenwand 3 verschiebbar ist. Dazu kann der Kolben 8 in an sich bekannter Weise mit nicht dargestellten Dichtlippen oder Dichträndern ausgestaltet sein, welche an der Kartuschenwand 3 anliegen, wenn der Kolben 8 in die Aufnahmekammer 2 eingeführt ist.

Der Kolben 8 wird separat von der Kartusche 1 hergestellt, beispielsweise in einem Spritzgiessverfahren und üblicherweise erst nach dem Befüllen der Aufnahmekammer 2 eingesetzt.

Eine vorteilhafte Massnahme besteht darin, dass der Kolben auf seiner der Aufnahmekammer zugewandten Oberfläche, also derjenigen Fläche die nach dem Einsetzen des Kolbens 8 die Aufnahmekammer 2 begrenzt, eine dritte Folie 9 aufweist.

Die erfindungsgemäss vorgesehene erste Folie 6 sowie die optional vorgesehene zweite und dritte Folie 7 bzw. 9 dienen als Barriere bzw. als Diffusionssperre, welche das Hineindiffundieren oder das Hinausdiffundieren von Stoffen verhindert. Diese Stoffe können beispielsweise chemische Bestandteile des in der Aufnahmekammer 2 enthaltenen Mediums sein oder Luftfeuchtigkeit oder Sauerstoff. Die Folie 6 und optional die Folien 7 und 9 ermöglichen somit eine besonders lange Lagerfähigkeit der mit einem Medium befüllten Kartusche 1. Dadurch, dass die erste Folie 6 als Barriereschicht bzw. Diffusionssperre wirkt, ist es möglich, die Kartuschenwand 3 mit einer Dicke D auszugestalten, die deutlich geringer ist als bei bekannten Kartuschen, denn bei den vom Stand der Technik her bekannten Kartuschen muss eine grössere Wandstärke vorgesehen werden, damit die Kartusche genügend diffusionsdicht ist bzw. gegen Ausgasen geschützt ist. Aufgrund der ersten Folie 6 ist es möglich, die Kartuschenwand 3 mit einer Dicke D von höchstens 2 mm, vorzugsweise höchstens 1.5 mm und speziell von höchstens 0.8 mm herzustellen. Dabei ist die Untergrenze von 0.8 mm in erster Linie durch das mit heute bekannten Spritzgiessverfahren realisierbare Verhältnis aus Einspritzlänge bzw. -weg für den Kunststoff und Dicke der Kunststoffschicht bedingt. Die im Vergleich zu bekannten Kartuschen stark reduzierte Dicke D der Kartuschenwand 2 hat den vorteilhaften Effekt, dass deutlich weniger Rohstoff für die Herstellung der Kartusche 1 benötigt wird und dass sich die Abfallmenge der üblicherweise für den Einmalgebrauch ausgelegten Kartusche 1 sowohl im Hinblick auf das Volumen als auch auf das Gewicht deutlich reduziert.

Der zweite vorteilhafte Effekt der ersten Folie 6 ist es, dass sie die Reibung zwischen dem Kolben 8 und der Kartuschenwand 3 reduziert. Während der Anwendung wird zum Austragen des Mediums aus der Aufnahmekammer 2 der Kolben 8 in Richtung der Längsachse A bewegt, um das Medium durch den Auslasskanal 51 zu fördern. Hierbei ermöglicht die erste Folie 6 ein leichteres Gleiten des Kolbens 8 entlang der Kartuschenwand 3.

Die zweite und die dritte Folie 7 bzw. 9 haben den Vorteil, dass mit ihnen der gesamte Aufnahmeraum 2 der Kartusche 1 mit einer Barriereschicht bzw. einer Diffusionssperre umgeben ist, das heisst, das Medium in der Aufnahmekammer 2 ist vollständig von den Folien 6,7,9 umgeben bzw. von diesen eingeschlossen, was im Hinblick auf eine besonders gute Lagerfähigkeit vorteilhaft ist. Die drei Folien 6,7,9 können - müssen aber nicht - bezüglich ihrer Dicke d und ihrer Zusammensetzung gleichartig ausgestaltet sein. Aus praktischen Gründen ist es bevorzugt, wenn die Folien 6,7,9 jeweils eine Dicke d von höchstens 0.2 mm und vorzugsweise von etwa 0.1 mm aufweisen.

Jede der Folien 6,7,9 kann für den jeweiligen Anwendungsfall optimal angepasst werden. Je nach Zusammensetzung und Art des Mediums in der Aufnahmekammer 2 können die Folien 6,7,9 so ausgestaltet werden, dass sie eine optimale Lagerfähigkeit und einen optimalen Schutz der Kartuschenwand 3 bzw. der Stirnseite 4 gewährleisten. Hierdurch ist es auch möglich, für die Kartusche 1 einen Kunststoff zu verwenden, der an sich gegenüber dem Medium in der Aufnahmekammer 2 empfindlich ist, bzw. von diesem Medium angegriffen würde. Aufgrund der Folien 6,7 kommt nämlich das Medium in der Aufnahmekammer 2 gar nicht mit der Kartuschenwand 3 bzw. der Stirnfläche 4 in Berührung. Hierdurch wird es möglich, für die Herstellung der Kartusche ein besonders preisgünstiges oder ein besonders umweltschonendes Material zu verwenden. Insbesondere eignen sich daher auch Bio-Polymere für die Herstellung der Kartusche 1.

Eine besonders bevorzugte Massnahme ist es, wenn die erste oder die zweite oder die dritte Folie 6,7,9 als Mehrschichtsystem ausgestaltet ist, also beispielsweise aus mehreren übereinandergelegten Folien oder Schichten geformt ist. Diese verschiedenen Schichten der Folie 6,7,9 können verschiedene Funktionen haben. Auf der der Aufnahmekammer 2 zugewandten Seite kann beispielsweise eine Schutzschicht sein, die aus einem gegenüber dem auszutragenden Medium unempfindlichen Kunststoff besteht, beispielsweise Polyamid (PA) oder Polybutylenterephtalat (PBT). Daran kann sich optional eine Barriereschicht anschliessen, die das Aus- bzw. Eintreten von Substanzen wie Wasser, Sauerstoff oder VOC (Volatile Organic Compounds)verhindert. Dann kann beispielsweise eine Füllschicht folgen, die z. B. aus Recyclat besteht. Auch können Schichten aus einem Polyolefin wie PE oder PP vorgesehen sein oder metallische Schichten.

Ergänzend oder alternativ können auch geschäumte Folien als Schicht vorgesehen sein.

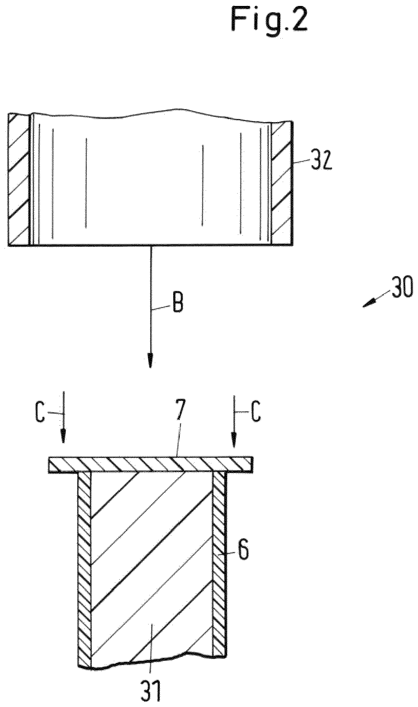

Die erfindungsgemässe Kartusche wird in einem Spritzgiessverfahren hergestellt. Anhand von Fig. 2 wird nun ein Ausführungsbeispiel eines Verfahrens erläutert, welches zum Herstellen der Kartusche 1 geeignet ist. Wie allgemein üblich wird beim Spritzgiessen ein Werkzeug 30 verwendet, das Kerne und Hohlräume umfasst, in welche der flüssige Kunststoff eingespritzt wird. In Fig. 2 ist nur ein solcher Kern 31 dargestellt, nämlich derjenige, welcher formgebend für die Aufnahmekammer 2 der Kartusche 1 ist. Beim Schliessen des Werkzeuges 30 bewegt sich der Kern 31 in ein entsprechend geformtes Gegenstück 32, wie dies der Pfeil B in Fig. 2 symbolisch andeutet. Dazu können entweder der Kern 31 oder das Gegenstück 32 oder beide bewegt werden. Nach dem Schliessen des Werkzeuges 30 existiert dann zwischen dem Kern 31 und dem Gegenstück 32 ein Hohlraum, der ein negatives Abbild der Kartuschenwand 3 und der Stirnfläche 4 ist. In diesen Hohlraum wird der flüssige Kunststoff eingespritzt, wie dies durch die beiden Pfeile mit dem Bezugszeichen C angedeutet ist, und erstarrt dort. Anschliessend wird das Werkzeug 30 geöffnet und die Kartusche 1 entformt und ausgestossen.

Erfindungsgemäss wird vor dem Spritzgiessen der Kartusche 1 auf die Mantelfläche des Kerns 31 eine Folie aufgebracht, die bei der fertigen Kartusche 1 die erste Folie 6 bildet.

Nach dem Schliessen des Werkzeuges 30 wird die Folie 6 mit dem flüssigen Kunststoff umspritzt. Dabei schmilzt die Folie 6 durch den Kontakt mit dem flüssigen Kunststoff bedingt leicht an oder wird plastifiziert. Hierdurch kommt es zu einer besonders innigen und unlösbaren Verbindung zwischen der Kartuschenwand 3 und der Folie 6.

Bei dem hier beschriebenen Ausführungsbeispiel des erfindungsgemässen Verfahrens wird die bevorzugte Ausführungsform der Kartusche 1 hergestellt, bei welcher die Stirnseite 4 der Kartusche mit der zweiten Folie 7 versehen ist. Dazu wird vor dem Spritzgiessen auf die Stirnseite des Kerns 31 eine kreisscheibenförmige Folie aufgelegt, die in der fertigen Kartusche dann die zweite Folie 7 bildet. Die kreisscheibenförmige Folie ist dabei vorzugsweise so bemessen, dass sie wie in Fig. 2 dargestellt über den Rand der Stirnseite des Kerns 31 übersteht. Wenn dann nach dem Schliessen des Werkzeugs 30 der flüssige Kunststoff eingespritzt wird (Pfeile C) so biegt dieser den Teil der kreisscheibenförmigen Folie, der über den Rand der Stirnfläche des Kerns 31 heraussteht um, darstellungsgemäss nach unten. Hierdurch wird die kreisscheibenförmige Folie 7 innig mit der Folie 6 verbunden oder fest angedrückt, sodass in der fertigen Kartusche 1 eine dichte und optional feste Verbindung zwischen der ersten und der zweiten Folie 6 bzw. 7 besteht.

Es ist natürlich wichtig, dass die Folien 6 und 7 solange an dem Kern 31 anhaften, bis sie mit Kunststoff umspritzt sind. Dieses Anhaften ist auf verschiedene Weisen realisierbar, beispielsweise elektrostatisch oder durch Erzeugen eines Unterdrucks durch entsprechende Saugöffnungen im Kern 31.

Für die Herstellung des Kartusche eignen sich alle an sich bekannten, für Kartuschen verwendete Kunststoffe beispielsweise Polyamide (PA), Polypropylen (PP), Polyethylen (PE), Polybutylenterephthalat (PBT), oder Polyolefine im allgemeinen. Insbesondere aufgrund der Verwendung der Folien 6 und 7 sind auch Bio-Polymere für die erfindungsgemässe Kartusche geeignet.

Die Kartusche 1 wird zunächst ohne den Kolben 8 im Spritzgiessverfahren hergestellt und dann an ihrem Auslass 5 verschlossen. Von dem noch offenen darstellungsgemäss unteren Ende der Aufnahmekammer 2 wird dann das Medium in die Aufnahmekammer 2 eingefüllt. Anschliessend wird der Kolben 8, der optional mit der dritten Folie 9 versehen ist, in die Aufnahmekammer 2 eingesetzt, und bildet dann den Kammerboden, der die Aufnahmekammer 2 dichtend verschliesst. Häufig ist der Kolben 8 als Ventilkolben ausgestaltet, sodass beim Einsetzen des Kolbens 8 die zwischen dem Medium und dem Kolben gegebenenfalls vorhandene Luft in einfacher Weise abführbar ist.

Fig. 3 zeigt eine perspektivische Darstellung eines ersten Ausführungsbeispiels einer erfindungsgemässen Mehrkomponentenkartusche, die gesamthaft mit dem Bezugszeichen 100 bezeichnet ist. Die Mehrkomponentenkartusche umfasst mindestens zwei Kartuschen 1, von denen jede erfindungsgemäss ausgestaltet ist.

Im Folgenden wird mit beispielhaftem Charakter auf den für die Praxis besonders wichtigen Fall Bezug genommen, dass die Mehrkomponentenkartusche 100 eine Zweikomponentenkartusche ist, die genau zwei Kartuschen 1 umfasst. Es versteht sich jedoch, dass die Erfindung nicht auf solche Fälle beschränkt ist, sondern dass die Mehrkomponentnkartusche auch drei oder mehr Kartuschen umfassen kann.

Die beiden Kartuschen 1 der Mehrkomponentenkartusche 100 sind Seite an Seite nebeneinander angeordnet, sodass ihre Längsachsen A (siehe Fig. 1) parallel zueinander verlaufen. In Fig. 3 ist zum besseren Verständnis die eine der beiden Kartuschen 1 so dargestellt, dass ein Viertel Ihrer Stirnseite und ein Viertel der Kartuschenwand 3 entfernt ist.

Die beiden Kartuschen 1 sind vorzugsweise über die Verbindungsmittel 10 fest miteinander verbunden. Es ist aber auch möglich, dass die beiden Kartuschen 1 in einem gemeinsamen Spritzgiessprozess hergestellt sind und dann über nicht zerstörungsfrei lösbare Elemente fest miteinander verbunden sind, sodass die Zweikomponentenkartusche bezüglich der Kartuschenwände und Stirnseiten einstückig ist. Beispielsweise können entlang der Kartuschenwände oder zwischen den Stirnseiten Stege vorgesehen sein, welche die beiden Kartuschen 1 miteinander verbinden. Es ist ferner möglich, dass die beiden Kartuschen 1 über eine gemeinsame Basis an dem der Stirnseite 4 abgewandetn Ende der Aufnahmekammer 2 miteinander verbunden sind.

Für jede der beiden Kartuschen 1 ist jeweils ein Kolben 8 vorgesehen, welcher nach dem Befüllen der jeweiligen Aufnahmekammer 2 in diese eingeführt wird. Die beiden Auslässe 5 der Kartuschen 1 sind so angeordnet und ausgestaltet, dass sie ein gemeinsames Verbindungsstück 50 bilden, welches die beiden separaten Auslässe 5 umfasst, und das zum Zusammenwirken mit einem Zubehörteil ausgestaltet ist. In Fig. 3 ist als Zubehörteil ein Verschluss 60 vorgesehen, der zum Zusammenwirken mit dem Verbindungsstück 50 ausgestaltet ist und der die beiden Auslässe 5 verschliessen kann.

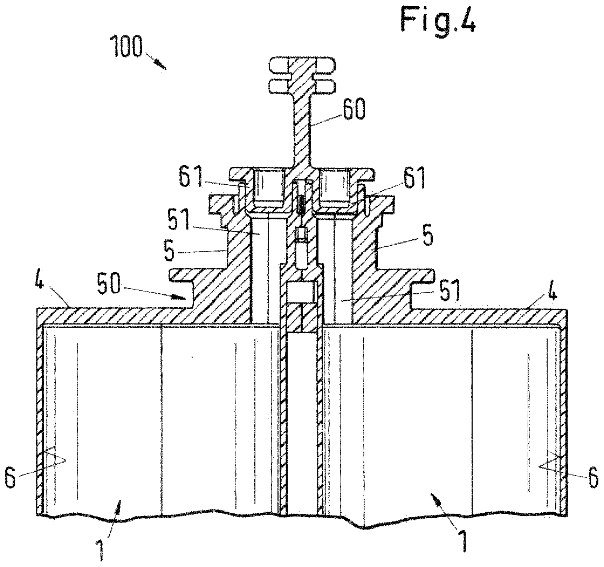

Fig. 4 zeigt das Verbindungsstück 50 mit den beiden Auslässen 5 in einer grösseren Darstellung. In Fig. 4 ist der Verschluss 60 in Wirkverbindung mit dem Verbindungsstück 50. Es ist zu erkennen dass der Verschluss 60 zwei Stopfen 61 aufweist, von denen jeder in einen Auslasskanal 51 der Auslässe 5 eingreift, um diesen dichtend zu verschliessen. Der Verschluss 60 kann so ausgestaltet sein, dass er nur über das Einführen der Stopfen 61 in die Auslasskanäle 51 mit dem Verbindungsstück 50 verbunden ist. Es können Sicherungsmittel vorgesehen sein (nicht dargestellt), um ein unbeabsichtigtes Entfernen des Verschlusses 60 zu vermeiden, beispielsweise Sollbruchstellen, die vor dem Entfernen des Verschlusses durch Abknicken, Drehen oder ähnliche Massnahmen auf- oder durchbrochen werden. Die Sicherungsmittel können auch als Rast- oder Schnappverbindungen ausgestaltet sein. Es ist ferner möglich, dass der Verschluss 60 über eine Gewinde- oder eine Bajonettverbindung mit dem Verbindungsstück 50 gekoppelt werden kann.

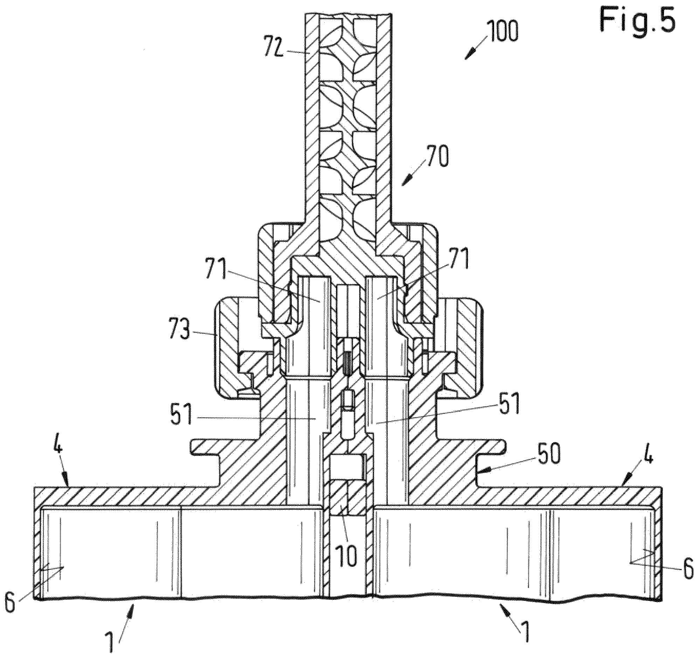

Fig. 5 zeigt das Verbindungsstück 50 bzw. die Auslässe 5 mit einem anderen Zubehörteil, nämlich mit einem Mischer 70. Es handelt sich hierbei um einen statischen Mischer 70 zum Durchmischen der beiden Medien, die in den jeweiligen Aufnahmekammern 2 der beiden Kartuschen 1 vorliegen. Der statische Mischer 70 umfasst in an sich bekannter Weise ein in Fig. 5 nur angedeutetes Mischerrohr 72 mit darin angeordneten Mischelementen (nicht dargestellt). Der Mischer 70 umfasst ferner zwei Einlässe 71 sowie ein Kopplungsstück 73. Wird der Mischer 70 auf die Mehrkomponentenkartusche 100 aufgesetzt, so greift jeder der separaten Einlässe 71 in oder über einen der Auslasskanäle 51, sodass die Einlässe 71 jeweils mit einem der Auslässe 5 eine Strömungsverbindung bilden und das jeweilige Medium aus der jeweiligen Aufnahmekammer 2 durch den jeweilgen Auslass 5 in den Mischer 70 gelangt. Hier treffen die beiden Medien aufeinander und werden beim Durchlaufen des Mischers 70 innig miteinander vermischt.

Für die Verbindung des Mischers 70 mit dem Verbindungsstück 50 über das Kopplungsstück 73 eignen sich alle ansich bekannte Arten der Verbindungen, insbesondere Schraub- oder Bajonettverbindungen.

Sind die Kartuschen 1 an ihrer Stirnseite 4 mit der zweiten Folie 7 versehen, so muss diese vor dem Austragen der Medien durchstossen oder durchstochen werden. Hierzu sind dem Fachmann viele Möglichkeiten bekannt. Eine Variante besteht darin, dass die Einlässe 71 des Mischers - oder entsprechende Teile eines andern Zubehörteils - an ihrem mit den Auslässen 5 zusammenwirkenden Enden derart ausgestaltet sind, beispielsweise mit einer Schrägkante oder einem Dorn, dass die Einlässe 71 beim Aufsetzen des Mischers 70 die zweite Folie 7 durchstossen oder in anderer Weise öffnen.

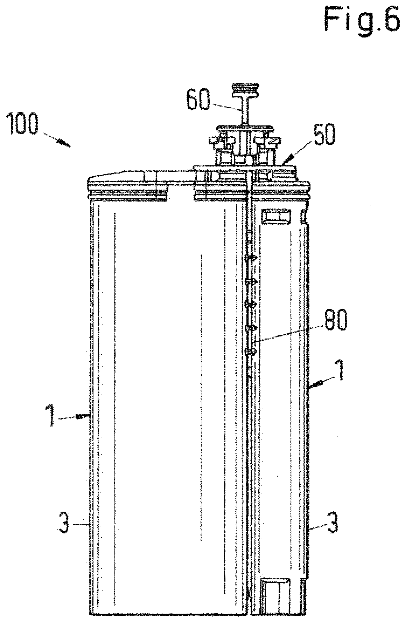

Fig. 6 zeigt die Ansicht eines zweiten Ausführungsbeispiels einer erfindungsgemässen Mehrkomponentenkartusche 100. Im Folgenden wird nur auf die Unterschiede zum ersten Ausführungsbeispiel näher eingegangen. Die Erläuterungen die bezüglich des ersten Ausführungsbeispiels gemacht wurden, gelten in sinngemäss gleicher Weise auch für das zweite Ausführungsbeispiel.

Bei dem zweiten Ausführungsbeispiel umfasst die Mehrkomponentenkartusche zwei Kartuschen 1, wobei die Aufnahmekammern 2 der beiden Kartuschen 1 verschiedene Volumen aufweisen. Derartige Mehrkomponentenkartuschen 100 sind für solche Zweikomponetensystem gedacht, bei denen die beiden Komponenten in einem von 1:1 verschiedenen Volumenverhältnis miteinander gemischt werden sollen. Bei der in Fig. 6 dargestellten Mehrkomponentenkartusche 100 hat die darstellungsgemäss linke Kartusche 1 das zehnfache Volumen wie die darstellungsgemäss rechte Kartusche 1. Natürlich sind auch andere Verhältnisse realisierbar, beispielsweise 2:1 oder 4:1.

Bei der in Fig. 6 dargestellten Mehrkomponentenkartusche 100 sind ferner weitere Verbindungsmittel 80 zwischen den beiden Kartuschen 1 vorgesehen, die hier als eine Mehrzahl von Stegen ausgebildet sind, von denen sich jeder zwischen den benachbarten Kartuschenwänden 3 der Kartuschen 1 erstreckt.

Wie bereits erwähnt wird die Zwei- bzw. Mehrkomponentenkartusche 100 vorzugsweise aus zwei einzelnen Kartuschen 1 zusammengesetzt oder in einem einstufigen Spritzgiessprozess hergestellt, bei welchem beide Kartuschen gemeinsam und dann vorzugsweise als Einheit spritzgegossen werden. Vor dem Befüllen der Kartuschen 1 werden die Auslässe 5 mit dem Verschluss 60 verschlossen. Von dem noch offenen den Stirnseiten 4 abgewandten Enden der Aufnahmekammern werden dann die jeweiligen Medien bzw. Komponenten in die Aufnahmekammern 2. Anschliessend wird jeweils ein Kolben 8, optional jeweils mit der dritten Folie 9 versehen, in die Aufnahmekammern 2 eingesetzt, welcher dann den jeweiligen Kammerboden bildet und die Aufnahmekammern 2 dichtend verschliesst. Häufig sind die Kolben 8 als Ventilkolben ausgestaltet, sodass beim Einführen der Kolben 8 die zwischen dem Kolben 8 und dem Medium vorhandene Luft abgeführt werden kann. Nachdem die Mehrkomponentenkartusche 100 befüllt ist, kann sie gelagert werden wobei die erste Folie 6 und die optional vorgesehne zweite und dritte Folie 7, 9 den Kartuscheninhalt vor Ausgasen oder sonstigen diffusionsbedingten Einflüssen schützen.

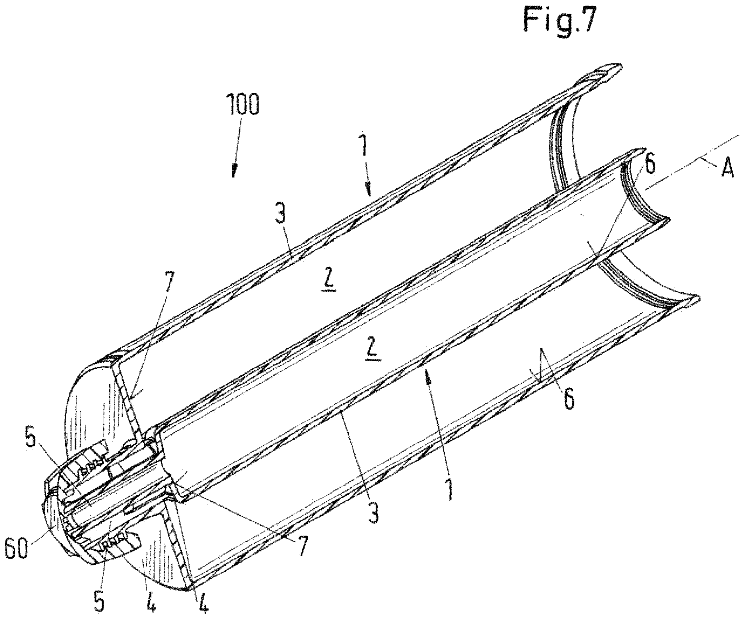

Fig. 7 zeigt eine perspektivische Längsschnittdarstellung eines dritten Ausführungsbeispiels einer erfindungsgemässen Mehrkomponentenkartusche 100. Im Folgenden wird nur auf die Unterschiede zum ersten bzw. zweiten Ausführungsbeispiel näher eingegangen. Die Erläuterungen, die bezüglich des ersten und zweiten Ausführungsbeispiels gemacht wurden, gelten in sinngemäss gleicher Weise auch für das dritte Ausführungsbeispiel. Bei dem dritten Ausführungsbeispiel sind die beiden Kartuschen 1 ineinander angeordnet, sodass die Kartuschenwand 3 der darstellungsgemäss äusseren Kartusche 1 die Kartuschenwand 3 der darstellungsgemäss inneren Kartusche 1 vollständig umgibt. Vorzugsweise ist dabei die innere Kartusche in der äusseren Kartusche zentriert, sodass ihre Längsachsen A zusammenfallen. Das heisst, in einem zur gemeinsemen Längsachse A senkrechten Schnitt durch die beiden Aufnahmekammern 2 bilden die beiden Kartuschenwände 3 der inneren und der äusseren Kartusche 1 konzentrische Kreise um die Längsachse A. Solche Mehrkomponentenkartuschen 100 werden üblicherweise als Koaxialkartuschen bezeichnet und sind an sich dem Fachmann hinreichend bekannt sodass sie keiner näheren Bedeutung erläutern. Erfindungsgemäss weist jede der beiden Kartuschen 1, nämlich sowohl die innere als auch die äussere Kartusche 1 jeweils eine Kartuschenwand 3 auf, die an ihrer die jeweilige Aufnahmekammer 2 begrenzenden Innenseite die erste Folie 6 auf, die sich jeweils über die gesamte Kartuschenwand 3 erstreckt. Optional kann auch hier an jeder Stirnfläche 4 jeweils die zweite Folie 7 vorgesehen sein. Nicht dargestellt sind in Fig. 7 die beiden Kolben 8, die jeweils optional mit der dritten Folie 9 versehen sein können. Der zu der darstellungsgemäss äusseren Kartusche 1 gehörende Kolben 8 ist dabei in an sich bekannter Weise als Ringkolben ausgestaltet. Die als Koaxialkartusche ausgestaltete Mehrkomponentenkartusche 100 kann entweder in einem einzigen Spritzgiessprozess hergestellt werden, oder die beiden Kartuschen 1 werden zunächst jeweils separat in einem Spritzgiesprozess hergestellt und anschliessend verbunden.

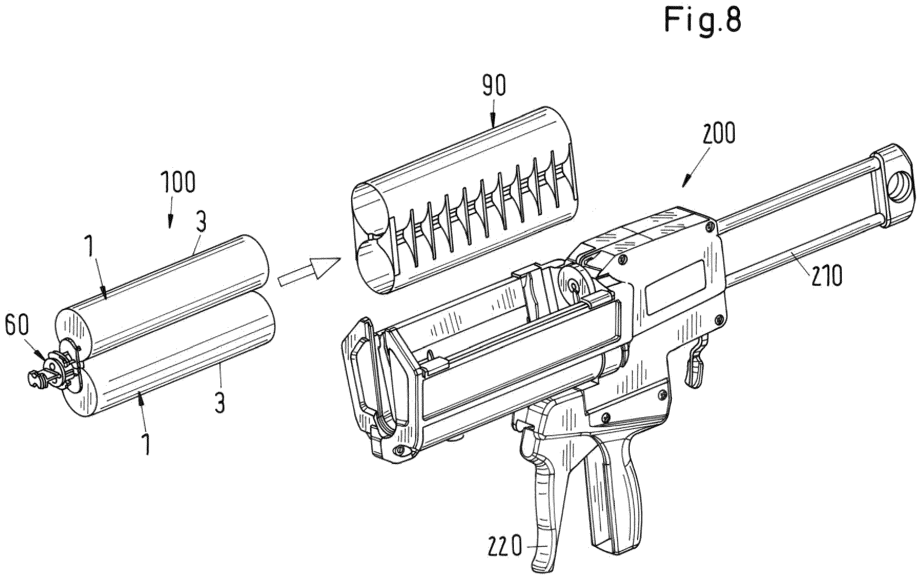

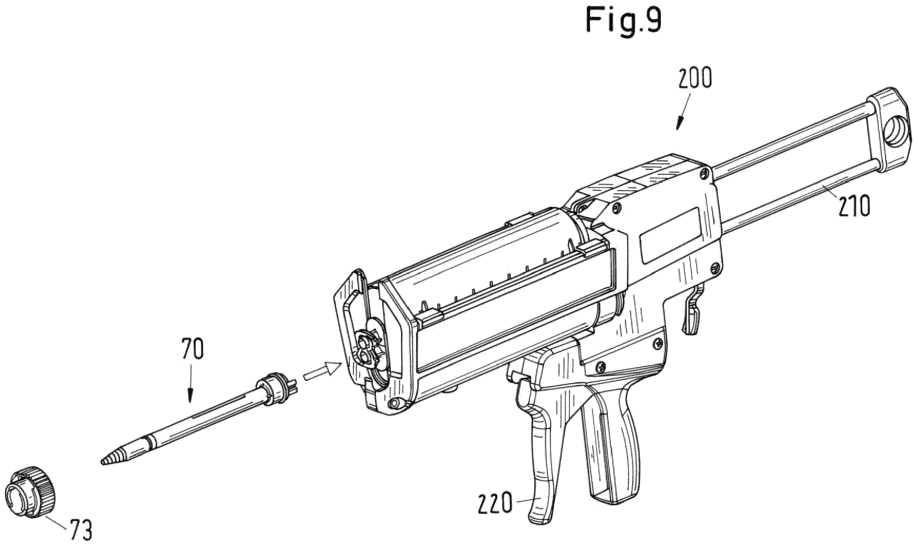

Bezugnehmend auf die Fig. 8 und 9 wird nun die Verwendung der Zwei- bzw. Mehrkomponentenkartusche 100 erläutert. Zur Verwendung der Mehrkomponentenkartusche 100 wird diese üblicherweise in die Halterung einer Austragsvorrichtung (Dispenser) 200 eingelegt. Da die Mehrkomponentenkartusche 100 aufgrund der ersten Folie 6 üblicherweise mit dünnen Kartuschenwänden 3 ausgestaltet ist, wird für das Austragen vorzugsweise eine Stützkartusche 90 verwendet, damit die Mehrkomponentenkartusche der mechanischen Belastung insbesondere der Druckbelastung beim Austragen standhalten kann. Die Stützkartusche 90 ist für den Mehrmalgebrauch ausgelegt, sie kann beliebig oft wiederverwendet werden. Alternativ ist natürlich auch möglich, die Stützfunktion nicht durch eine separate Stützkartusche zu realisieren, sondern die Stützfunktion in der Halterung der Austragsvorrichtung zu realisieren.

Wie dies der Pfeil ohne Bezugszeichen in Fig. 8 andeutet, wird die Mehrkomponentenkartusche 100 zunächst in die Stützkartusche 90 eingeführt und dann zusammen mit dieser in die Halterung der Austragsvorrichtung 200 eingelegt. Der Verschluss 60 wird entfernt, und an seiner Stelle wird ein Mischer 70 mittels seines Kopplungsstücks 73 an dem Verbindungsstück 50 befestigt (Fig. 9), hier mit einer Bajonettverbindung. Die Austragsvorrichtung 200 umfasst einen Doppelstössel 210, welcher mittels eines Aktivators 220 vorschiebbar ist. Der Doppelstössel 210 übt dann eine Kraft auf die beiden Kolben 8 in den Aufnahmekammern 2 aus, wodurch sich diese entlang der Längsachsen A der Kartuschen 1 verschieben und das jeweilige Medium durch den jeweiligen Auslass 5 in den statischen Mischer 70 fördern. Hier treffen die beiden Medien (Komponenten) aufeinander und werden beim Durchlaufen des Mischers innig miteinander vermischt.

## Patentansprüche

1. Kartusche mit mindestens einer sich in Längsrichtung erstreckenden Aufnahmekammer (2) für ein auszutragendes Medium, mit einer Stirnseite (4) und einer Kartuschenwand (3), welche die Aufnahmekammer (2) begrenzen und einstückig spritzgegossen sind, wobei die Stirnseite (4) einen Auslass für das Medium aufweist, wobei die Kartuschenwand (3) an ihrer die Aufnahmekammer (2) begrenzenden Innenseite eine erste Folie (6) aufweist, die sich über die gesamte Kartuschenwand (3) erstreckt und unlösbar mit der Kartuschenwand (3) verbunden ist und wobei die Stirnseite (4) auf ihrer der Aufnahmekammer (2) zugewandten Oberfläche eine zweite Folie (7) aufweist die sich über die gesamte Stirnseite (4) erstreckt und unlösbar mit der Stirnseite (4) verbunden ist.

2. Kartusche nach einem der vorangehenden Ansprüche, wobei ferner ein Kolben (8) vorgesehen ist, welcher an dem der Stirnseite (4) abgewandten Ende in die Aufnahmekammer (2) einführbar ist und dichtend entlang der Kartuschenwand (3) in Längsrichtung verschiebbar ist.

3. Kartusche nach Anspruch 2, bei welcher der Kolben (8) auf seiner der Aufnahmekammer (2) zugewandten Oberfläche eine dritte Folie (9) aufweist.

4. Kartusche nach einem der vorangehenden Ansprüche, bei welcher die Kartuschewand (3) eine Wanddicke (D) von höchstens 2mm, vorzugsweise höchstens 1.5 mm und insbesondere höchstens 0.8 mm aufweist.

5. Kartusche nach einem der vorangehenden Ansprüche, wobei die erste oder die zweite oder die dritte Folie (6; 7; 9) eine Dicke (d) von höchsten 0.2 mm, vorzugsweise von etwa 0.1 mm aufweist.

6. Kartusche nach einem der vorangehenden Ansprüche, bei welcher Verbindungsmittel (10) vorgesehen sind, mittels welcher die Kartusche mit einer zweiten Kartusche verbindbar ist.

7. Kartusche nach einem der vorangehenden Ansprüche, wobei die erste oder die zweite oder die dritte Folie (6; 7; 9) als Mehrschichtsystem ausgestaltet ist.

8. Verfahren zum Herstellen einer Kartusche gemäss einem der Ansprüche 1-7, bei welchem in einem Werkzeug (30) einer Spritzgiessvorrichtung ein Kern (31) vorgesehen ist, welcher formgebend für die Aufnahmekammer (2) der Kartusche ist, **dadurch gekennzeichnet, dass** auf die Mantelfläche des Kerns (31) eine Folie (6) aufgebracht wird, die anschliessend mit einem flüssigen Kunststoff umspritzt wird.

9. Verfahren nach Anspruch 8, bei welchem auf die Stirnseite des Kerns (31) eine zweite Folie (7) aufgebracht wird, bevor der flüssige Kunststoff in das Werkzeug (30) eingebracht wird.

10. Mehrkomponentenkartusche mit mindestens zwei Kartuschen, **dadurch gekennzeichnet, dass** jede Kartusche (1) gemäss einem der Ansprüche 1-7 ausgestaltet ist, wobei die beiden Kartuschen (1) bezüglich der Längsrichtung nebeneinander angeordnet sind, oder wobei die beiden Kartuschen (1) ineinander, vorzugsweise koaxial ineinander angeordnet sind, sodass die eine Kartusche die andere Kartusche umschliesst..

11. Mehrkomponentenkartusche nach Anspruch 10, bei welcher die beiden Kartuschen (1) über die Verbindungsmittel (10) fest miteinander gekoppelt sind.

12. Mehrkomponentenkartusche nach einem der Ansprüche 10 oder 11, bei welcher die Auslässe (5) der Kartuschen (1) ein gemeinsames Verbindungsstück (50) bilden, das zum Zusammenwirken mit einem Zubehörteil, insbesondere mit einem Verschluss (60) oder mit einem Mischer (70), ausgestaltet ist.

13. Mehrkomponentenkartusche nach Anspruch 12 mit einem Verschluss (60), der zum Zusammenwirken mit dem Verbindungsstück (50) ausgestaltet ist und zwei Stopfen (61) aufweist, von denen jeder in einen Auslass (5) eingreifen kann, um diesen zu verschliessen.

14. Mehrkomponentenkartusche nach einem der Ansprüche 10-13, wobei die Aufnahmekammern (2) der beiden Kartuschen (1) verschiedene Volumen aufweisen.

## Claims

1. A cartridge having at least one reception chamber (2), which extends in a longitudinal direction, for a medium to be dispensed, having an end face (4) and a cartridge wall (3) which bound the reception chamber (2) and are injection molded in one piece, wherein the end face (4) has an outlet for the medium; wherein the cartridge wall (3) has a first film (6) at its inner side bounding the reception chamber (2), the first film extending over the total cartridge wall (3) and being non-releasably connected to the cartridge wall (3); and wherein the end face (4) has a second film (7) at its surface facing the reception chamber (2), the second film extending over the total end face (4) and being non-releasably connected to the end face (4).

2. A cartridge in accordance with one of the preceding claims, wherein a piston (8) is further provided which can be introduced into the reception chamber (2) at an end remote from the end face (4), the piston being sealingly displaceable along the cartridge wall (3) in the longitudinal direction.

3. A cartridge in accordance with claim 2, in which the piston (8) has a third film (9) at its surface facing the reception chamber (2).

4. A cartridge in accordance with any one of the preceding claims, in which the cartridge wall (3) has a wall thickness (D) of at most 2 mm, preferably of at most 1.5 mm, and in particular of at most 0.8 mm.

5. A cartridge in accordance with any one of the preceding claims, wherein the first film or the second film or the third film (6; 7; 9) has a thickness (d) of at most 0.2 mm, preferably of approximately 0.1 mm.

6. A cartridge in accordance with any one of the preceding claims, in which connection means (10) are provided by means of which the cartridge can be connected to a second cartridge.

7. A cartridge in accordance with any one of the preceding claims, wherein the first film or the second film or the third film (6; 7; 9) is designed as a multilayer system.

8. A method of manufacturing a cartridge in accordance with any one of the claims 1 to 7, in which a core (31) is provided in a tool (30) of an injection molding apparatus, the core having a shape corresponding to a shape of the reception chamber (2) of the cartridge, **characterized in that** a film (6) is applied to a jacket surface of the core (31) and is subsequently overmolded with a liquid plastic.

9. A method in accordance with claim 8, in which a second film (7) is applied to an end face of the core (31) before the liquid plastic is introduced into the tool (30).

10. A multicomponent cartridge having at least two cartridges, **characterized in that** each cartridge (1) is designed in accordance with any one of the claims 1 to 7, with the two cartridges (1) being arranged next to one another with respect to the longitudinal direction, or with the two cartridges (1) being arranged in one another, preferably coaxially in one another, so that the one cartridge surrounds the other cartridge.

11. A multicomponent cartridge in accordance with claim 10, in which the two cartridges (1) are fixedly coupled to one another via the connection means (10).

12. A multicomponent cartridge in accordance with one of the claims 10 or 11, in which the outlets (5) of the cartridges (1) form a common connection piece (50) which is configured to cooperate with an accessory part, in particular with a closure part (60) or with a mixer (70).

13. A multicomponent cartridge in accordance with claim 12, having a closure part (60) which is configured to cooperate with the connection piece (50) and has two plugs (61) of which each can engage into an outlet (5) to close it.

14. A multicomponent cartridge in accordance with any one of the claims 10 to 13, wherein the reception chambers (2) of the two cartridges (1) have different volumes.

## Revendications

1. Cartouche, comportant au moins une chambre de réception (2) pour un fluide à distribuer, qui s'étend en direction longitudinale, et une face frontale (4) et une paroi de cartouche (3) qui délimitent la chambre de réception (2) et qui sont coulées par injection en un seul tenant, dans laquelle la face frontale (4) comprend une sortie pour le fluide, sur sa face intérieure délimitant la chambre de réception (2) la paroi de cartouche (3) comprend un premier film (6) qui s'étend sur toute la paroi de cartouche (3) et qui est relié de façon non détachable à la paroi de cartouche (3), et sur sa surface tournée vers la chambre de réception (2), la face frontale (4) comprend un second film (7) qui s'étend sur toute la face frontale (4) et qui est relié de façon non détachable à la face frontale (4).

2. Cartouche selon l'une des revendications précédentes, dans laquelle est en outre prévu un piston (8) qui est susceptible d'être introduit dans la chambre de réception (2) à l'extrémité détournée de la face frontale (4) et qui est mobile en direction longitudinale avec étanchement le long de la paroi de cartouche (3).

3. Cartouche selon la revendication 2, dans laquelle le piston (8) comprend un troisième film (9) sur sa surface tournée vers la chambre de réception (2).

4. Cartouche selon l'une des revendications précédentes, dans laquelle la paroi de cartouche (3) présente une épaisseur de paroi (D) de 2 mm au maximum, de préférence de 1,5 mm au maximum et en particulier de 0,8 mm au maximum.

5. Cartouche selon l'une des revendications précédentes, dans laquelle le premier ou le second ou le troisième film (6 ; 7 ; 9) présente une épaisseur (d) de 0,2 mm au maximum, de préférence d'environ 0,1 mm.

6. Cartouche selon l'une des revendications précédentes, dans laquelle sont prévus des moyens de liaison (10) à l'aide desquels la cartouche est susceptible d'être reliée à une seconde cartouche.

7. Cartouche selon l'une des revendications précédentes, dans laquelle le premier ou le second ou le troisième film (6 ; 7 ; 9) est conçu sous forme de système multicouche.

8. Procédé de réalisation d'une cartouche selon l'une des revendications 1 à 7, dans lequel on prévoit un noyau (31) dans un outil (30) d'un dispositif de coulée par injection, qui définit la forme de la chambre de réception (2) de la cartouche, **caractérisé en ce que** on applique un film (6) sur la surface enveloppe du noyau (31) et ensuite on le munit d'une matière plastique liquide par surmoulage.

9. Procédé selon la revendication 8, dans lequel on applique un second film (7) sur la face frontale du noyau (31), avant d'introduire la matière plastique liquide dans l'outil (30).

10. Cartouche à composants multiples, comportant au moins deux cartouches, **caractérisée en ce que** chaque cartouche (1) est conçue selon l'une des revendications 1 à 7, et les deux cartouches (1) sont agencées l'une à côté de l'autre par rapport à la direction longitudinale, ou les deux cartouches (1) sont agencées l'une dans l'autre, de préférence coaxialement l'une dans l'autre, de sorte que l'une des cartouches enferme l'autre cartouche.

11. Cartouche à composants multiples selon la revendication 10, dans laquelle les deux cartouches (1) sont fermement couplées l'une à l'autre par les moyens de liaison (10).

12. Cartouche à composants multiples selon l'une des revendications 10 ou 11, dans laquelle les sorties (5) des cartouches (1) forment une pièce de liaison commune (50) qui est conçue pour coopérer avec un accessoire, en particulier avec un obturateur (60) ou avec un mélangeur (70).

13. Cartouche à composants multiples selon la revendication 12, comportant un obturateur (60) qui est conçu pour coopérer avec la pièce de liaison (50) et qui comprend deux bouchons (61) dont chacun est capable de s'engager dans une sortie (5) pour la refermer.

14. Cartouche à composants multiples selon l'une des revendications 10 à 13, dans laquelle les chambres de réception (2) des deux cartouches (1) présentent des volumes différents.
